# EUROPÄISCHE PATENTANMELDUNG

(11) **EP 2 733 337 A2**
(43) Veröffentlichungstag der Anmeldung: **21.05.2014**
(21) Anmeldenummer: 13193011.7
(22) Anmeldetag: 15.11.2013
(51) Int. Cl.: F02D 41/14, F02B 37/18, F02B 37/24, F02D 41/00

(54) **Verfahren und Vorrichtung zum Steuern eines Ladedrucks einer aufgeladenen Brennkraftmaschine**

(30) Priorität: 19.11.2012 DE 102012022491; 15.03.2013 DE 102013004631
(71) Anmelder: Volkswagen Aktiengesellschaft, 38440 Wolfsburg (DE)
(72) Erfinder: Scheller, Pierre, 38440 Wolfsburg (DE); Thaler, Tim, 30161 Hannover (DE)

(57) **Zusammenfassung**

Es werden ein Verfahren und eine Vorrichtung zum Steuern eines Ladedrucks einer aufgeladenen Brennkraftmaschine mit einer Steuerung und wenigstens einem Abgasturbolader offenbart. Ein zu erreichender Ladedruck wird der Steuerung vorgegeben. Wenigstens ein Betriebsparameter des Abgasturboladers wird in Funktion des zu erreichenden Ladedrucks berechnet. In der Berechnung wird eine Größe für einen Turbinenwirkungsgrad einer Turbine des Abgasturboladers dadurch berücksichtigt, dass die Größe für den Turbinenwirkungsgrad mittels eines mehrdimensionalen Kennfelds bestimmt wird, wobei eine erste Dimension des Kennfelds eine erste Größe, welche ein Maß für das Druckverhältnis der Turbine darstellt, eine zweite Dimension des Kennfelds eine zweite Größe, welche ein Maß für die Drehzahl der Turbine darstellt, und eine dritte Dimension des Kennfelds eine dritte Größe, welche ein Maß für die Abgastemperatur vor der Turbine darstellt, sind. Der Ladedruck wird dann mittels des Betriebs des Abgasturboladers mit dem wenigstens einen berechneten Betriebsparameter aufgebaut.

## Beschreibung

Die Erfindung betrifft ein Verfahren zum Steuern eines Ladedrucks einer aufgeladenen Brennkraftmaschine gemäß dem Oberbegriff des Anspruchs 1. Des Weiteren betrifft die Erfindung ein Vorrichtung zum Steuern eines Ladedrucks einer aufgeladenen Brennkraftmaschine gemäß dem Oberbegriff des Anspruchs 6.

Diese Anmeldung beansprucht die Priorität der deutschen Patentanmeldung DE 10 2012 022 491.5 vom 19. November 2012. Der Offenbarungsgehalt der besagten deutschen Patentanmeldung wird hiermit durch Bezugnahme vollständig in diese Beschreibung übernommen.

Verbreitet kommen aufgeladene Brennkraftmaschinen zum Einsatz, bei denen der Ladedruck gesteuert beziehungsweise geregelt ist. Ein Sollladedruck leitet sich vom Wunschdrehmoment des Fahrers, das zum Beispiel über die Position des Fahrpedals gefordert wird. Während des Betriebes der Brennkraftmaschine ist je nach konkreter Konstruktionsweise der Ladeeinrichtung der Sollladedruck über die Position eines Ventils in einem Bypass um die Turbine eines Abgasturboladers (Wastegate) oder über die Positionierung verstellbarer Turbinenleitschaufeln (VTG) einzustellen. Grundlage für die Modellierung bildet das Leistungsgleichgewicht zwischen Verdichter und Turbine (Turboladerhauptgleichung). Im Fall eines Wastegateladers wird die Turboladerhauptgleichung nach dem Turbinenmassenstrom umgestellt und mit Kenntnis des Gesamtabgasmassenstroms schließlich der erforderliche Massenstrom über das Wastegate berechnet. Bei einem VTG-Lader wird die Turbine stets mit dem gesamten Abgasmassenstrom beaufschlagt. Führungsgröße für die Ladedruckregelung ist daher das Druckverhältnis über die Turbine in der Turboladerhauptgleichung. Für die Berechnung wird der Turbinenwirkungsgrad benötigt, welcher in Form eines Kennfelds in der Steuerung abgelegt ist. Derartige Kennfelder werden vom ATL-Hersteller zur Verfügung gestellt oder experimentell ermittelt.

Im Artikel "Ein Programmsystem zur Berechnung des Zusammenwirkens von Verbrennungsmotoren und Abgasturboladern" von Tomas Bulaty aus MTZ Motortechnische Zeitschrift 43 (1982) 11, Seiten 535 bis 543, wird ein Berechnungsmodell beschrieben, in welchem Kennfelder der Turbinen zum Einsatz gelangen, die aus einer Anzahl von Messpunkten ermittelt worden sind. Der Turbinenwirkungsgrad wird in Funktion der Laufzahl als eine Parabel oder eine Kurve mit Parabelabschnitten genähert.

In geläufigen, derzeit verwendeten Software-Lösungen wird der Turbinenwirkungsgrad aus einem Kennfeld, das aufgespannt vom Turbinen-Druckverhältnis und von der reduzierten Laderdrehzahl oder über VTG-Stellung und Laufzahl ist, ermittelt. Es hat sich in der Praxis herausgestellt, dass der Ansatz, ein Kennfeld mit zwei Eingangsgrößen für die Ermittlung des Turbinenwirkungsgrades zu nutzen, der tatsächlich auftretenden thermodynamischen Situation nicht gerecht wird: Die direkte Auswirkung der Turbineneintrittstemperatur auf den Wirkungsgrad bleibt in der gewöhnlichen Vorgehensweise unberücksichtigt. Anders ausgedrückt, die Physik der Turbine im verbreitet eingesetzten Modell wird nicht vollständig erfasst.

Bereits mit veränderten Zündwinkeln, welche beispielsweise aufgrund einer schlechten Kraftstoffqualität oder heißen oder kalten Außentemperaturen notwendig sind, treten bei gleichen Lastzuständen der Brennkraftmaschine voneinander abweichende Turbineneintrittstemperaturen auf. Mit zunehmender Variabilität der Ladungswechseleinrichtungen oder bei Magerbrennverfahren kann eine Turbine in einem sehr großen Temperaturintervall betrieben werden. Für die Steuerung oder Regelung des Ladedrucks bedeutet dies, dass die Vorsteuerung des Ladedruckstellers, die unter bestimmten Umgebungsbedingungen, zum Beispiel Luftdruck und Temperatur, ermittelt worden ist, nicht fehlerfrei auf veränderte Konditionen übertragen werden kann. In der Folge kann ein größerer Regelanteil auftreten, je größer die Abweichungen zu den Ausgangsbedingungen werden. Aktuelle Strukturen einer modellbasierten Ladedruckregelung benötigen zur Abbildung des Turbinenwirkungsgrad manuelle Korrekturfaktoren, deren Werte für unterschiedliche Randbedingungen aufwendig bestimmt müssen.

Eine Software zur kennfeldbasierten Turbinenmodellierung mit optionaler Temperaturkorrektur zum Beispiel das Programm "GT-Power" von Gamma Technologies, Westmont, IL, USA. Darin werden Turbinen- und Verdichterkennfelder zu einer Referenztemperatur gespeichert und mittels globaler Skalierungsfaktoren zur Anpassung an die Turbine im Rahmen eines Modellabgleichs auf andere Temperaturen korrigierend umgerechnet. Der Skalierungsfaktor kann temperaturabhängig, beispielsweise mit Hilfe einer Kennlinie, bedatet werden.

Selbst bei einer nachfolgenden Korrektur mittels temperaturabhängigen Skalierungsfaktoren wird die Lage im Kennfeld nicht hinreichend genau repräsentiert. Sowohl das Druckverhältnis der Turbine, insbesondere die Laufzahl, als auch die Drehzahl der Turbine, insbesondere die ATL-Drehzahl, sind ebenfalls temperaturabhängig. Bei konventioneller Berechnung resultieren in der Folge signifikante Abweichungen vom modellierten zum tatsächlichen Wirkungsgrad.

Aufgabe der vorliegenden Erfindung ist es, ein Verfahren zum Steuern eines Ladedrucks einer Brennkraftmaschine zu schaffen, in welchem ein hinreichend genauer Wert für den Turbinenwirkungsgrad verwendet wird.

Diese Aufgabe wird erfindungsgemäß durch ein Verfahren zum Steuern eines Ladedrucks einer aufgeladenen Brennkraftmaschine mit den Merkmalen gemäß Anspruch 1 gelöst. Vorteilhafte Weiterbildungen der Erfindung sind in den abhängigen Ansprüchen charakterisiert.

Das erfindungsgemäße Verfahren ist geeignet für das Steuern eines Ladedrucks einer aufgeladenen Brennkraftmaschine mit einer Steuerung und wenigstens einem durch die Steuerung ansteuerbaren Abgasturbolader. Im erfindungsgemäßen Verfahren wird ein zu erreichender Ladedruck der Steuerung vorgegeben. Wenigstens ein Betriebsparameter des Abgasturboladers wird in Funktion des zu erreichenden Ladedrucks berechnet, wobei in der Berechnung eine Größe für einen Turbinenwirkungsgrad einer Turbine des Abgasturboladers berücksichtigt wird.

Dabei wird die Größe für den Turbinenwirkungsgrad mittels eines mehrdimensionalen, insbesondere dreidimensionalen Kennfelds bestimmt. Eine erste Dimension des Kennfelds ist eine erste Größe, welche ein Maß für das Druckverhältnis der Turbine darstellt, eine zweite Dimension des Kennfelds ist eine zweite Größe, welche ein Maß für die Drehzahl der Turbine darstellt, und eine dritte Dimension des Kennfelds ist eine dritte Größe, welche ein Maß für die Abgastemperatur vor der Turbine darstellt. Der Ladedruck wird dann mittels des Betriebs des Abgasturboladers mit dem wenigstens einen berechneten Betriebsparameter aufgebaut.

Ein sehr bedeutsamer Unterschied zum Vorbekannten liegt in der erfindungsgemäß eine genauere Modellierung gestattende Abbildung der Turbinenphysik für ein Verfahren zum Steuern des Ladedrucks. Damit kann das Modell für verschiedenste Randbedingungen mit angemessener Präzision und Gültigkeit zum Einsatz gelangen. In vorteilhafter Weise wird der Applikationsaufwand gesenkt. Erfindungsgemäß wird die Möglichkeiten geschaffen, das gesamte Einsatzspektrum der Brennkraftmaschine mit den turbinenrelevanten, insbesondere durch sowohl innere als auch äußere Einflüsse veränderliche Parametern hinreichend genau darzustellen.

In bevorzugter Ausführungsform des erfindungsgemäßen Verfahrens wird die Größe für den Turbinenwirkungsgrad, welche insbesondere ausgehend vom mehrdimensionalen Kennfeld bestimmt wird, mit einem Wert für einen maximalen Wirkungsgrad multipliziert und/oder dass wenigstens eine Größe einer Dimension des Kennfelds mit einem Maximalwert multipliziert. Vorteilhaft erfolgt also das Ablegen der Werte in einem normierten und/oder skalierten Kennfeld, so dass eine Individualisierung mittels eines Skalierungsfaktors erfolgt.

Im erfindungsgemäßen Verfahren wird die Größe für den Turbinenwirkungsgrad entweder aus dem mehrdimensionalen Kennfeld entnommen wird oder durch Extrapolation und/oder durch Interpolation im mehrdimensionalen Kennfeld berechnet. Im Allgemeinen sind im erfindungsgemäßen Kennfeld Werte an einzelnen Stützstellen gespeichert, so dass gegebenenfalls ein konkreter Wert für eine andere Kombination von Werten der Größen in den drei Dimensionen errechnet werden muss.

In einer ersten Gruppe von Ausführungsformen gelang das erfindungsgemäße Verfahren für aufgeladene Brennkraftmaschinen mit einem Turbolader, der eine variable Turbinengeometrie aufweist, zum Einsatz. Mit anderen Worten, in dieser Gruppe von Ausführungsformen weist die Turbine des Abgasturboladers Leitschaufeln auf, wobei der wenigstens eine Betriebsparameter eine Lage der Leitschaufeln des Abgasturboladers ist. Erfindungsgemäß wird die Lage der Leitschaufeln eingestellt.

In einer zweiten Gruppe von Ausführungsformen gelang das erfindungsgemäße Verfahren für aufgeladene Brennkraftmaschinen mit einem Turbolader mit einer steuerbaren, bevorzugt regelbaren Bypassleitung zur Umgehung der Turbine (Wastegate-Turbolader) zum Einsatz. Mit anderen Worten, in dieser (zur ersten Gruppe alternativen) Gruppe von Ausführungsformen ist der Abgasturbolader ein Wastegate-Turbolader, wobei der wenigstens eine Betriebsparameter eine Öffnungsweite eines Wastegateventils ist. Erfindungsgemäß wird die Öffnungsweite des Wastegateventils eingestellt.

Im Zusammenhang des erfinderischen Gedankens steht auch eine Vorrichtung zum Steuern eines Ladedrucks einer aufgeladenen Brennkraftmaschine. Die erfindungsgemäße Vorrichtung umfasst wenigstens einen Abgasturbolader, der mittels der Vorrichtung zum Steuern ansteuerbar ist, wenigstens eine Recheneinheit und eine Speichereinheit. Erfindungsgemäß ist in der Speichereinheit wenigstens ein Computerprogramm abgelegt, bei dessen wenigstens teilweiser Ausführung in der Recheneinheit ein Verfahren zum Steuern des Ladedrucks der aufgeladenen Brennkraftmaschine mit Merkmalen oder Merkmalskombinationen gemäß dieser Darstellung durchgeführt wird.

In bevorzugter Ausführungsform der erfindungsgemäßen Vorrichtung ist die erste Größe die normierte Laufzahl der Turbine des Turboladers und/oder die zweite Größe die reduzierte Drehzahl der Turbine des Turboladers die dritte Größe die Turbineneintrittstemperatur. Insbesondere kann dabei die Größe für den Turbinenwirkungsgrad ein normierter isentroper Turbinenwirkungsgrad sein.

Konkret können die Einträge im mehrdimensionalen Kennfeld durch Regression jeweils aus gemessenen Werten bei einem festen Parameter der Größe der dritten Dimension und einem festen Parameter der Größe der zweiten Dimension für die variable Argumente der Größe der ersten Dimension in durch ein Extremum getrennten Abschnitten der Argumentachse bestimmt sein.

Folglich umfasst eine erfindungsgemäße aufgeladene Brennkraftmaschine mit einem Abgasturbolader eine erfindungsgemäße Vorrichtung zum Steuern des Abgasturboladers mit Merkmalen oder Merkmalskombinationen gemäß dieser Darstellung. Die Brennkraftmaschine kann eine selbstzündende oder einer fremdzündende Brennkraftmaschine sein.

Die Vorrichtung zum Steuern beziehungsweise die aufgeladene Brennkraftmaschine kann in einem Fahrzeug, insbesondere einem gleislosen Landfahrzeug, zum Beispiel einem Automobil, Personenkraftwagen oder Nutzkraftwagen, zum Einsatz gelangen.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: ein schematisches Ablaufdiagramm einer bevorzugten Ausführungsform des erfindungsgemäßen Verfahrens,
- Figur 2: in Teilbild A eine beispielhafte Darstellung von gewonnenen Messergebnissen für einen isotropen Turbinenwirkungsgrad und in Teilbild B eine Darstellung des normierten gemessenen isotropen Turbinenwirkungsgrad des Teilbilds A,
- Figur 3: eine beispielhafte Darstellung des zu Figur 2 Teilbild B zugehörigen maximalen Turbinenwirkungsgrads und der zugehörigen Laufzahl,
- Figur 4: eine exemplarische Darstellung einer Ausführungsform eines erfindungsgemäß normieren Wirkungsgradkennfeldes, und
- Figur 5: eine graphische Darstellung einer bevorzugten Modellstruktur für die Ermittlung des isentropen Turbinenwirkungsgrads.

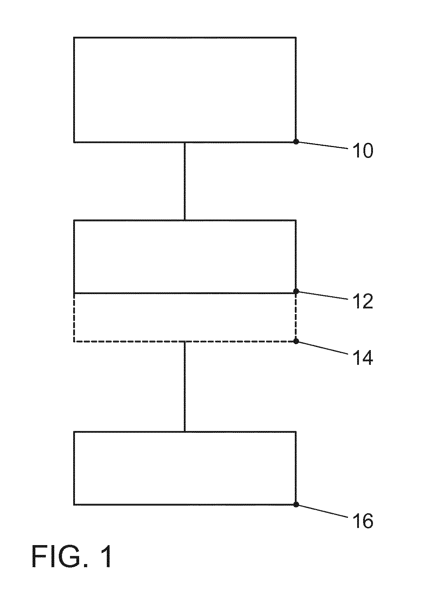

Die Figur 1 zeigt ein schematisches Ablaufdiagramm einer bevorzugten Ausführungsform des erfindungsgemäßen Verfahrens. Das erfindungsgemäße Verfahren dient dem Steuern eines Ladedrucks einer aufgeladenen Brennkraftmaschine, insbesondere einer mittels eines Abgasturboladers aufgeladenen Brennkraftmaschine. Die Brennkraftmaschine umfasst eine Steuerung und wenigstens einen durch die Steuerung ansteuerbaren Abgasturbolader. Erfindungsgemäß wird der Steuerung ein zu erreichender Ladedruck vorgegeben (Schritt 10). Insbesondere ist die Ladedruckvorgabe abhängig von der gewünschten Leistungsabgabe. Es wird wenigstens ein Betriebsparameter des Abgasturboladers in Funktion des zu erreichenden Ladedrucks berechnet (Schritt 12). Dabei wird in der Berechnung eine Größe für einen Turbinenwirkungsgrad einer Turbine des Abgasturboladers berücksichtigt (Teilschritt 14 von Schritt 12). Erfindungsgemäß geschieht dies dadurch, dass die Größe für den Turbinenwirkungsgrad mittels eines mehrdimensionalen Kennfelds bestimmt wird. Eine erste Dimension des Kennfelds ist eine erste Größe, welche ein Maß für das Druckverhältnis der Turbine darstellt, eine zweite Dimension des Kennfelds eine zweite Größe, welche ein Maß für die Drehzahl der Turbine darstellt, und eine dritte Dimension des Kennfelds eine dritte Größe, welche ein Maß für die Abgastemperatur vor der Turbine darstellt. Konkret sind in bevorzugter Ausführungsform die verwendeten Größen: Die erste Größe ist die normierte Laufzahl der Turbine des Turboladers, die zweite Größe die reduzierte Drehzahl der Turbine des Turboladers und die dritte Größe die Turbineneintrittstemperatur. Im erfindungsgemäßen Verfahren wird dann der Ladedruck mittels des Betriebs des Abgasturboladers mit dem wenigstens einen berechneten Betriebsparameter aufgebaut (Schritt 16).

Eine bevorzugte Vorgehensweise für die Bereitstellung der Daten für das Kennfeld wird nachfolgend exemplarisch beschrieben.

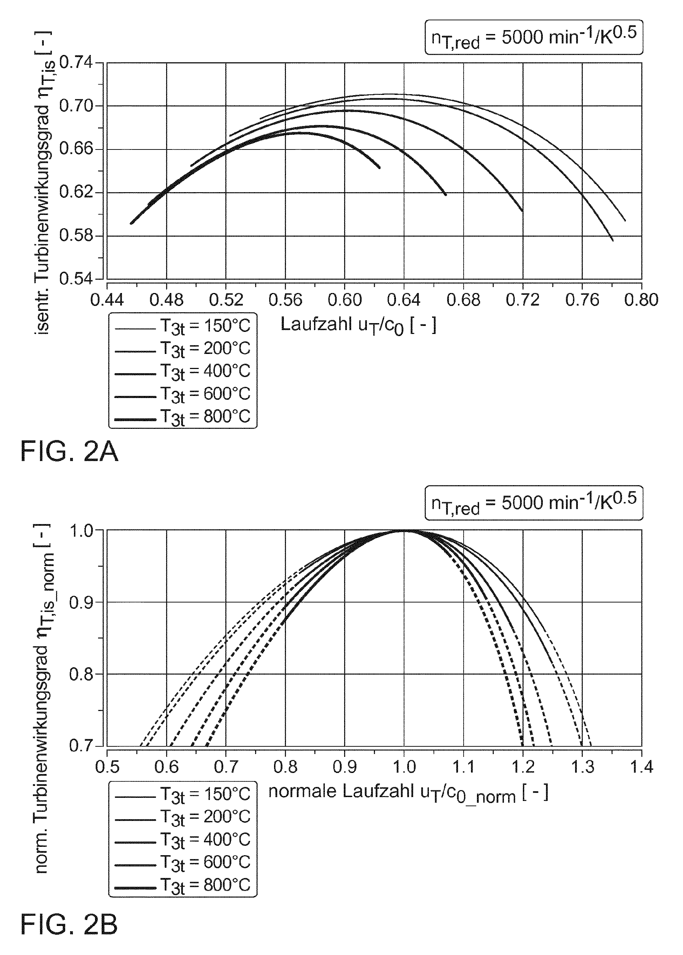

Die Figur 2 zeigt in Teilbild A eine beispielhafte Darstellung von gewonnenen Messergebnissen für einen isotropen Turbinenwirkungsgrad und in Teilbild B eine Darstellung des normierten gemessenen isotropen Turbinenwirkungsgrad des Teilbilds A. Für die Berechnung des aktuellen Turbinenwirkungsgrades innerhalb der modellbasierten Ladedrucksteuerung beziehungsweise Ladedruckregelung wird erfindungsgemäß eine kennfeldbasierte Methode benutzt. Die Grundlage für den Turbinenwirkungsgrad bilden Messdaten bei verschiedenen Parametern, wie verschiedenen Drehzahlen, Temperaturen und Reibleistungen der Turboladerlagerung. Diese können zum Beispiel auf einem Prüfstand gewonnen werden. Darauf aufbauend erfolgt die Berechnung des isentropen Turbinenwirkungsgrads als Verhältnis der Summe aus Verdichterleistung und Reibleistung zu der Turbinenleistung. Im Teilbild A der Figur 2 sind exemplarisch Messergebnisse für eine reduzierte Drehzahl 5000 min⁻¹ / K ^{0.5} in Form einer Kurvenschar für verschiedene Turbineneintrittstemperaturen dargestellt.

Da die modellbasierte Ladedrucksteuerung auch den Turbinenwirkungsgrad bei kleineren Laufzahlen als den gemessenen Laufzahlen benötigt, muss eine Extrapolation erfolgen. Zu diesem Zweck werden die gemessenen Kennlinien auf den Punkt des maximalen, isentropen Turbinenwirkungsgrades normiert, siehe Teilbild B der Figur 2. Auf diese Weise ist ein effizientes Extrapolationsvorgehen möglich. Mittels einer Regression nach der Methode der kleinsten Fehlerquadrate werden Ausgleichspolynome dritten Grades bestimmt. Die Regression erfolgt separat für die zwei durch das Extremum getrennten Zweige mit normierten Laufzahlen kleiner als 1 und größer als 1.

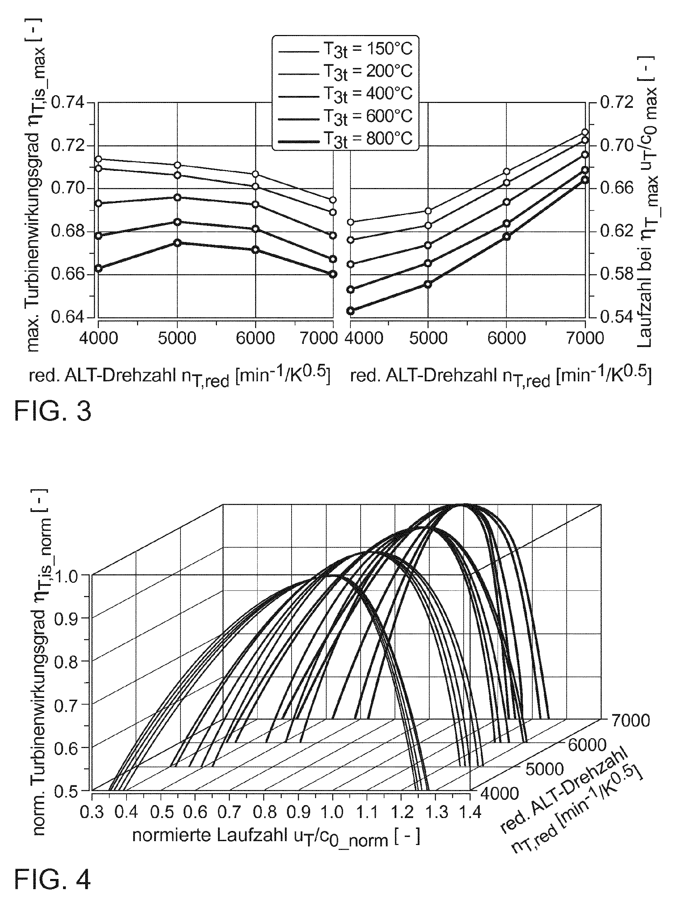

Die Figur 3 stellt beispielhaft des zu Figur 2 Teilbild B zugehörigen maximalen Turbinenwirkungsgrad und die zugehörige Laufzahl, Ergebnis der Extrapolation und Regression, dar. Die Normierung der einzelnen Kennlinien auf einen gemeinsamen Bezugswert ist weiterhin die Grundlage für die Interpolation des Wirkungsgradverhaltens bei unterschiedlichen Randbedingungen. Die Normierung des Turbinenwirkungsgradverlaufs erfolgt auf den maximalen Turbinenwirkungsgrad und dessen Lage über der Laufzahl. Ein wesentlicher Bestandteil dabei ist die Ermittlung dieser Kennzahlen für unterschiedliche reduzierte Turboladerdrehzahlen und Turbineneintrittstemperaturen. Die Figur 3 veranschaulicht den Verlauf der ermittelten Bezugsfaktoren exemplarisch für eine Turbinenradvariante. Diese Verläufe werden neben der eigentlichen Normierung des Turbinenwirkungsgradverhaltens auch innerhalb der Modellstruktur für die Überführung der betriebspunktabhängigen, normierten Darstellung in eine absolute Darstellung verwendet.

Die Figur 4 ist eine exemplarische Darstellung einer Ausführungsform eines erfindungsgemäß normieren Wirkungsgradkennfeldes. Zu sehen sind Kurvenscharen, parametriert mit der Turbineneintrittstemperatur, für verschiedene reduzierte Abgasturboladerdrehzahlen. Die gezeigten Daten aus dem Teilbild B der Figur 2 und der Figur 3 sind somit die Grundlage für die Abbildung des Turbinenwirkungsgrades in der modellbasierten Ladedrucksteuerung. Dafür wird aus den normierten, extrapolierten Wirkungsgradkennlinien zunächst ein zusammenhängendes Kennfeld, ein Datenraum, erstellt (siehe dazu die Figur 4), welches neben der Abhängigkeit von der Turbineneintrittstemperatur auch alle gemessenen reduzierten Turbinendrehzahlen enthält. Dieser Datenraum dient zur Bereitstellung des Wirkungsgradverlaufes, passend zu den aktuell vorliegenden Randbedingungen.

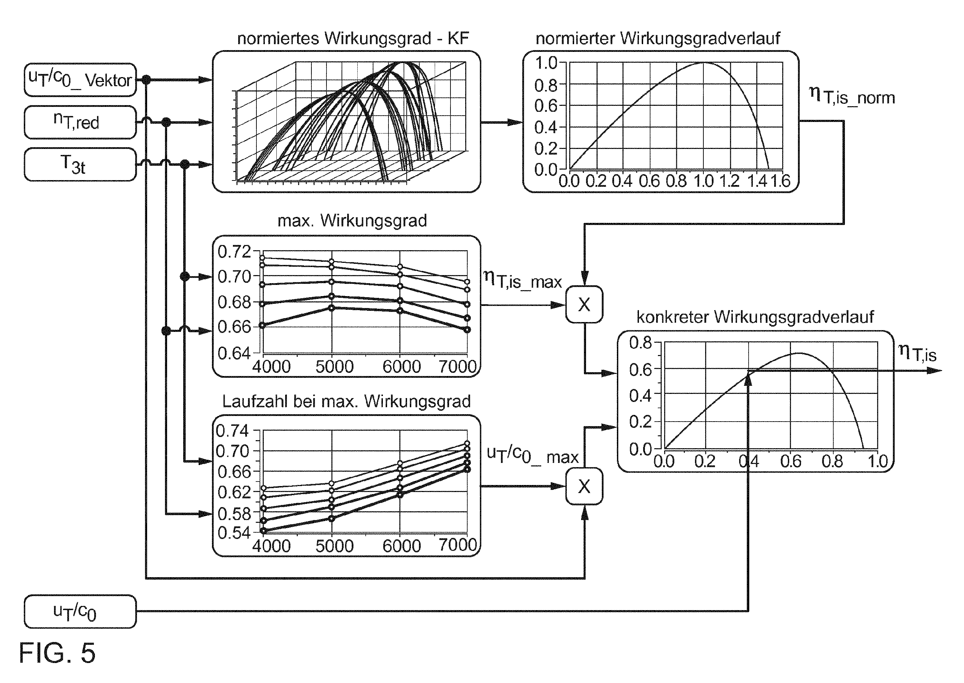

In der Figur 5 wird eine bevorzugte Modellstruktur für die Ermittlung des isentropen Turbinenwirkungsgrads graphisch dargestellt. Unter Verwendung von ebenfalls modellierten Eingangswerten für die reduzierte Turbinendrehzahl und der Turbineneintrittstemperatur erfolgt die Interpolation eines normierten Wirkungsgradverlaufes aus dem bereitgestellten Datenraum. Als Bezugsgröße dient dabei eine feste Stützstellenvorgabe einer Reihe von Laufzahlen ("Laufzahlvektor"). Aus dem normierten Wirkungsgradkennfeld (siehe Figur 4) wird dann der normierte Wirkungsgradverlauf bei den Parametern Drehzahl und Temperatur entnommen. Damit die auf diese Weise erzeugte Kennlinie für die Bestimmung des konkreten, isentropen Turbinenwirkungsgrades nutzbar ist, muss noch die bereits angemerkte Umrechnung von den normierten Werten in absolute Werte erfolgen. Hierfür sind die bei der Normierung erzeugten Kennlinien für den maximalen Wirkungsgrad und dessen Lage über der Laufzahl (siehe Figur 3) ebenfalls im Modell mit abgelegt. Die aktuell anliegenden Randbedingungen für Drehzahl und Temperatur, die für die Interpolation des normierten Wirkungsgradverlaufes dienen, werden dabei auch wieder als Führungsgrößen für die Interpolation der konkret anliegenden Kennwerte für den maximalen Wirkungsgrad und die Laufzahl genutzt, mit denen sich schließlich der gesuchte, absolute Wirkungsgradverlauf berechnen lässt. Neben dem Wirkungsgrad erfolgt diese Rückrechnung auch mit der Stützstellenvorgabe der Laufzahl, so dass sich bei Zusammenführung dieser beiden Informationen, und unter Verwendung der aktuell anliegenden Laufzahl, durch einen dynamischen Detektionsprozess der isentrope Turbinenwirkungsgrad ausgeben lässt.

### Bezugszeichenliste

- 10: Vorgeben eines zu erreichenden Ladedrucks
- 12: Berechnen eines Betriebsparameters
- 14: Berücksichtigen eines Größe für den Turbinenwirkungsgrad
- 16: Aufbauen des Ladedrucks

## Patentansprüche

1. Verfahren zum Steuern eines Ladedrucks einer aufgeladenen Brennkraftmaschine mit einer Steuerung und wenigstens einem durch die Steuerung ansteuerbaren Abgasturbolader, in welchem ein zu erreichender Ladedruck der Steuerung vorgegeben wird, wenigstens ein Betriebsparameter des Abgasturboladers in Funktion des zu erreichenden Ladedrucks berechnet wird, wobei in der Berechnung eine Größe für einen Turbinenwirkungsgrad einer Turbine des Abgasturboladers berücksichtigt wird, und der Ladedruck mittels des Betriebs des Abgasturboladers mit dem wenigstens einen berechneten Betriebsparameter aufgebaut wird,
**dadurch gekennzeichnet**
**dass** die Größe für den Turbinenwirkungsgrad mittels eines mehrdimensionalen Kennfelds bestimmt wird, wobei eine erste Dimension des Kennfelds eine erste Größe, welche ein Maß für das Druckverhältnis der Turbine darstellt, eine zweite Dimension des Kennfelds eine zweite Größe, welche ein Maß für die Drehzahl der Turbine darstellt, und eine dritte Dimension des Kennfelds eine dritte Größe, welche ein Maß für die Abgastemperatur vor der Turbine darstellt, sind.

2. Verfahren zum Steuern eines Ladedrucks einer aufgeladenen Brennkraftmaschine gemäß Anspruch 1,
**dadurch gekennzeichnet**
**dass** die Größe für den Turbinenwirkungsgrad mit einem Wert für einen maximalen Wirkungsgrad multipliziert wird und/oder dass wenigstens eine Größe einer Dimension des Kennfelds mit einem Maximalwert multipliziert wird.

3. Verfahren zum Steuern eines Ladedrucks einer aufgeladenen Brennkraftmaschine gemäß Anspruch 1 oder 2,
**dadurch gekennzeichnet**
**dass** die Größe für den Turbinenwirkungsgrad entweder aus dem mehrdimensionalen Kennfeld entnommen wird oder durch Extrapolation und/oder durch Interpolation im mehrdimensionalen Kennfeld berechnet wird.

4. Verfahren zum Steuern eines Ladedrucks einer aufgeladenen Brennkraftmaschine gemäß einem der vorhergehenden Ansprüche,
**dadurch gekennzeichnet**
**dass** die Turbine des Abgasturboladers Leitschaufeln aufweist, wobei der wenigstens eine Betriebsparameter eine Lage der Leitschaufeln des Abgasturboladers ist, und dass die Lage der Leitschaufeln eingestellt wird.

5. Verfahren zum Steuern eines Ladedrucks einer aufgeladenen Brennkraftmaschine gemäß einem der vorhergehenden Ansprüche 1 bis 4,
**dadurch gekennzeichnet**
**dass** der Abgasturbolader ein Wastegate-Turbolader ist, wobei der wenigstens eine Betriebsparameter eine Öffnungsweite eines Wastegateventils ist, und dass die Öffnungsweite des Wastegateventils eingestellt wird.

6. Vorrichtung zum Steuern eines Ladedrucks einer aufgeladenen Brennkraftmaschine mit wenigstens einem Abgasturbolader, der mittels der Vorrichtung zum Steuern ansteuerbar ist, umfassend wenigstens eine Recheneinheit und eine Speichereinheit,
**dadurch gekennzeichnet**
**dass** in der Speichereinheit wenigstens ein Computerprogramm abgelegt ist, bei dessen wenigstens teilweiser Ausführung in der Recheneinheit ein Verfahren zum Steuern des Ladedrucks der aufgeladenen Brennkraftmaschine gemäß einem der vorstehenden Ansprüche durchgeführt wird.

7. Vorrichtung zum Steuern eines Ladedrucks einer aufgeladenen Brennkraftmaschine gemäß Anspruch 6,
**dadurch gekennzeichnet**
**dass** die erste Größe die normierte Laufzahl der Turbine des Turboladers ist und/oder dass die zweite Größe die reduzierte Drehzahl der Turbine des Turboladers und/oder die dritte Größe die Turbineneintrittstemperatur ist.

8. Vorrichtung zum Steuern eines Ladedrucks einer aufgeladenen Brennkraftmaschine gemäß Anspruch 6 oder 7,
**dadurch gekennzeichnet**
**dass** die Größe für den Turbinenwirkungsgrad ein normierter isentroper Turbinenwirkungsgrad ist.

9. Vorrichtung zum Steuern eines Ladedrucks einer aufgeladenen Brennkraftmaschine gemäß Anspruch 6, 7 oder 8,
**dadurch gekennzeichnet**
**dass** die Einträge im mehrdimensionalen Kennfeld durch Regression jeweils aus gemessenen Werten bei einem festen Parameter der Größe der dritten Dimension und einem festen Parameter der Größe der zweiten Dimension für die variable Argumente der Größe der ersten Dimension in durch ein Extremum getrennten Abschnitten der Argumentachse bestimmt sind.

10. Aufgeladene Brennkraftmaschine mit einem Abgasturbolader,
**gekennzeichnet durch**
eine Vorrichtung zum Steuern des Abgasturboladers gemäß einem der vorhergehenden Ansprüche 6 bis 9.
